# EUROPEAN PATENT SPECIFICATION

(11) **EP 1 588 902 B1**
(45) Date of publication and mention of the grant of the patent: **05.11.2008**
(21) Application number: 05075960.4
(22) Date of filing: 22.04.2005
(51) Int. Cl.: B60R 19/18, B62D 21/15

(54) **Collision energy-absorbing element**
Element zur Absorption von Aufprallenergie
Elément absorbant l'énergie d'un impact

(30) Priority: 23.04.2004 NL 1026017
(43) Date of publication of application: 26.10.2005
(73) Proprietor: Corus Staal BV, 1970 CA Ijmuiden (NL)
(72) Inventor: Van Stijn, Ingrid Petronella Maria, 2204 AE Noordwijk (NL); Kelder, Maarten Hendrik, 1011 BT Amsterdam (NL)
(74) Representative: Kruit, Jan

(56) References cited:
- DE-A- 10 205 627
- DE-A- 19 913 078
- US-A- 6 138 429

## Description

The invention relates to a collision energy-absorbing element for use as a vehicle component, which element essentially has the shape of a tubular beam with a peripheral wall which is closed in cross-section, which beam has only one chamber which has a front, a rear, two side walls and two ends, the front of the beam being directed away from the vehicle when the element is being used as a vehicle component, so that a force acting on the front leads to the deformation of the element in case of a collision.

The invention also relates to the use of such an element in a vehicle component and to an element of this type.

Collision energy-absorbing elements are known per se. They are used, for example, as crash boxes between the bumper and the front longitudinals of the vehicle body. However, the amount of collision energy which such crash boxes are able to absorb is small as there is little space available.

It is also known to incorporate such collision energy-absorbing elements in the bumper of a vehicle. An example thereof is shown in EP 1262374 A1. The bumper which is described in this document is composed of an inwardly directed section made from a material of relatively high strength and an outwardly directed section of relatively low strength. The high-strength material imparts a stiffness to that section of the bumper which is sufficient to prevent bending and thus damage to the vehicle when a collision at low speed occurs. The outwardly directed section should deform in the case of a collision and absorb the collision energy.

It is a drawback of such elements that they comprise two different kinds of material, thus making the elements complicated and expensive. Also, the force which is required in order to deform the element cannot be controlled very well with the element according to this design. In addition, it is a drawback of the element described in EP 1262374 A1 that only the outwardly directed section deforms in case of a collision. This means that only a short deformation zone is available and the element can therefore only absorb little collision energy. According to EP 1262374, this element is therefore intended for collisions at low speeds.

Generally, it is a disadvantage of known collision energy-absorbing elements which are in the shape of a tubular beam that the deformation force increases quickly at the start of the deformation zone to reach a maximum deformation force, following which the deformation force decreases again. This is caused by the design of the collision energy-absorbing element, which deforms more easily when the maximum deformation force has been reached and offers less resistance to the deformation force. The deformation force always increases in the end zone as the element is being compressed completely; however, the intention is not for such an element to be compressed to such a degree, since this would mean that a high collision force is nevertheless passed on to the vehicle behind it.

US patent 6,138,429 shows a cross member for vehicles that has been extruded and that concsists of four chambers. Deformation of the beam takes place in several stages so as to take up impact energy. This document discloses the preamble to claim 1.

It is an object of the invention to provide a collision energy-absorbing element which can be constructed relatively simply and inexpensively.

It is another object of the invention to provide a collision energy-absorbing element which can absorb a relatively large amount of collision energy.

It is yet another object of the invention to provide a collision energy-absorbing element, in which the force required for deforming the element can be determined at the design stage.

It is again another object of the invention to provide a collision energy-absorbing element, in which the full length of the side walls between front and back is used for absorbing energy in order to absorb as much collision energy as possible.

One or more of these objects are achieved according to the invention by a collision energy-absorbing element for use as a vehicle component, as described in the introduction, the beam having only one chamber and a cross-section wherein the side walls of the beam have a transition section, as a result of which the distance between the side walls gradually changes in such a manner that the side walls on one side of the transition sections are at a greater distance from one another and the side walls on the other side of the transition sections are at a smaller distance from one another, such that on deformation the beam passes through at least two deformation zones, each of which requires a maximum deformation force, before, in an end zone at complete deformation, the beam requires a deformation force which only increases.

The element according to the invention thus provides a deformation zone which, after a first maximum deformation force, also has a second maximum deformation force. The amount of collision energy which the element can absorb is increased by means of the second deformation zone with the second maximum deformation force. This also makes it possible to prevent the element from having to deform completely, which would greatly increase the collision force. In addition, it is possible to adjust the deformation force over the course of the deformation zone, because the location and magnitude of the maximum deformation forces can be varied.

Preferably, the maximum deformation force of the second deformation zone is higher than the maximum deformation force of the first deformation zone. This is especially advantageous in view of the demands made on vehicles with respect to the safety of pedestrians, which mean that the deformation force has to be low at low speeds of the vehicle. In order nevertheless to be able to absorb sufficient collision energy at high speeds, it is highly advantageous that the maximum deformation force of the second deformation zone is higher than the maximum deformation force of the first deformation zone.

According to an advantageous embodiment, the second deformation zone is longer than the first deformation zone. As a result, with the maximum deformation force of the second zone being higher, it is also possible to absorb more energy.

According to a preferred embodiment, the transition sections in the side walls are at an angle to the adjoining sections of the side walls which is greater than 90°. By choosing this angle to be greater than 90°, the maximum force of the first deformation zone can be determined. A suitable choice is an angle of between 120° and 150°, preferably approximately 135°.

Preferably, the side walls on both sides of the transition sections are substantially parallel to one another, preferably at an angle to one another of at most 10°. By allowing the side walls on both sides of the transition sections to run substantially parallel, a high maximum force can be obtained from the second deformation zone.

According to a preferred embodiment, the sections of the side walls which are at a greater distance from one another are shorter than the sections of the side walls which are at a smaller distance from one another. The sections of the side walls which are at a greater distance from one another will deform first, following which the longer sections which are at a smaller distance from one another provide a long second deformation zone.

Preferably, the front of the beam and the rear of the beam are of different width, so that the beam has a relatively wide side and a relatively narrow side. Through this difference in width between the front and rear of the beam, the side walls can run substantially parallel to one another (except for the transition sections).

According to an advantageous embodiment, a deformable material is present at the transition sections of the side walls between the side walls. This deformable material supports the side walls, as a result of which the side walls require a higher deformation force.

Preferably, the beam is provided with a reinforcement over a section of the cross-section at the front or the rear. With a concentrated collision force, this reinforcement ensures that the element absorbs collision energy over a large part of its length; the reinforcement itself may also deform and absorb collision energy.

According to an advantageous embodiment, one or both ends of the beam are at least partly closed off by a deformable material. Thus, an additional element for absorbing deformation energy is provided at these ends.

The invention also relates to the use of a collision energy-absorbing element as described above as part of a longitudinal member or sill, A-pillar, B-pillar, C-pillar, D-pillar, E-pillar, bumper support, door reinforcement beam or seat part of a vehicle. These vehicle components should be able to absorb collision energy in order to protect the vehicle occupants. A collision energy-absorbing element which can absorb a relatively large amount of collision energy is thus desirable.

In addition, the invention relates to a bumper support of a vehicle provided with a collision energy-absorbing element as described above, in which the bumper support comprises the energy-absorbing element over at least part of its length. The energy-absorbing element may then, for example, be situated in front of the front longitudinals, while the intermediate section is designed to be stiff.

Preferably, the bumper support comprises the energy-absorbing element over its entire length. This makes it possible to absorb the maximum amount of energy in the case of a collision.

According to a preferred embodiment, the front section of the beam passes through the first deformation zone. The rear of the bumper support may in that case be provided with a reinforcement, the bumper support being able to deform freely.

According to another preferred embodiment, the rear section of the beam passes through the first deformation zone. This is advantageous if the front of the bumper support is reinforced.

Preferably, the ends of the bumper support comprise an energy-absorbing element. As a result, the ends of the bumper support can absorb additional collision energy.

The invention will be explained with reference to an exemplary embodiment according to the drawing, in which:
Fig. 1 diagrammatically shows a collision energy-absorbing element according to the invention in cross section;
Fig. 2 diagrammatically shows a graph of the collision energy versus the displacement in the deformation zone of an element according to Fig. 1.

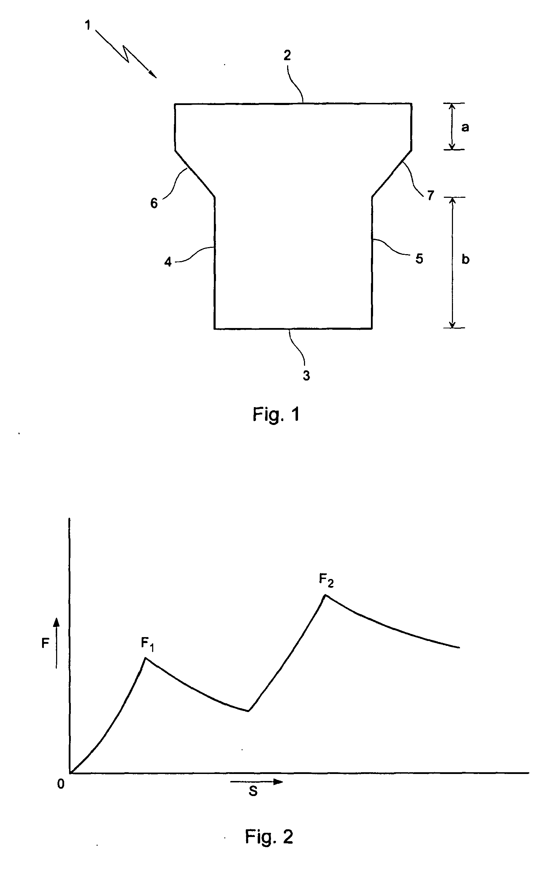

Fig. 1 shows a cross-section of a collision energy-absorbing element 1 in the shape of a tubular beam. The element has a front 2, a rear 3 and side walls 4 and 5. There is a transition section 6 in side wall 4 and a transition section 7 in side wall 5. The element is shaped in such a manner that the front 2 is of larger width than the rear 3, as a result of which the sections of the side wall 4 on both sides of the transition section 6 run substantially parallel to the sections of the side wall 5 on both sides of the transition section 7. The transition sections 6, 7 are at an angle of approximately 135° to the adjoining sections of the side walls 4, 5. The tubular beam forms one chamber having a closed peripheral wall.

The element is preferably produced by hydroforming from a tube having a simple geometric cross section, such as a round tube. The corners of the various sides or sections thereof will in that case not be sharp, but slightly rounded.

It will be clear that the element 1 in the shape of a tubular beam usually has a length which is greater than the width of the front 2 or the width of the side walls 4, 5. This is the case, for example, when the element 1 is used as a longitudinal member or sill, A-pillar, B-pillar, C-pillar, D-pillar, E-pillar, bumper support or door reinforcement beam of a vehicle; in all these cases, the tubular beam has a relatively great length. However, in some cases a collision energy-absorbing element may be used whose length is approximately equal to the width or the height. In these cases, the collision energy-absorbing element according to the invention may likewise be used, the length of the element being approximately equal to the width of the front 2 or the width of the side walls 4, 5.

When the collision energy-absorbing element 1 is used as a bumper support of a vehicle, for instance the front 2 will be directed away from the vehicle. In the case of a collision, the front 2 then comes into contact with a collision object, as a result of which a force F is applied on the front 2, which causes an opposite reactive force F on the rear 3 of the element, causing the element 1 to be compressed.

As a result of the shape of the element 1, the side walls 4, 5 will be forced inwards, leading to their deformation at the location of the transition sections 6, 7. As a result, the transition sections 6, 7 move towards each other and will, depending on the width of the front 2 and the length a of the parallel sections of the side walls between the front 2 and the transition sections 6, 7 either touch each other or hit the inside of the front 2. This deformation forms a first deformation zone of the element 1, the deformation force initially increasing rapidly to reach a maximum value F1 and then decreasing again.

Subsequently, the side walls 4, 5 between the rear 3 and the (already deformed) transition sections 6, 7 will be deformed as more collision energy has to be absorbed. As here there is no transition section present, the deformation force will again initially increase to reach a maximum value F2 and then decrease again in the deformation zone.

If yet more collision energy has to be absorbed, the element, in an end zone at complete deformation, will require a deformation force which increases again, as the element is in fact completely flattened.

The above situation is illustrated in Fig. 2, in which the force F is plotted against the distance s of the deformation zone. The first deformation zone in which the force initially increases to reach the value F1 and then decreases again can be clearly distinguished from the second deformation zone in which the force increases again to reach the value F2 and then decreases again. The amount of collision energy which is absorbed is determined by the area below the line of force in Fig. 2. The end zone in which the deformation force increases again is not shown in Fig. 2.

It will be clear that the deformation zone can readily be influenced with the aid of the collision energy-absorbing element 1 by varying the lengths a and b of the side walls, the width of the front 2 and rear 3, and the length and angle of the transition sections 6, 7. The degree of parallelity of the side walls and the curvature of the sides will have an effect as well.

It is also possible to fit more than one transition section per side wall in order to influence the deformation zone.

## Claims

1. Collision energy-absorbing element for use as a vehicle component, which element (1) essentially has the shape of a tubular beam with a peripheral wall which is closed in cross-section, which beam has a front (2), a rear (3), two side walls (4, 5) and two ends, the front of the beam being directed away from the vehicle when the element is being used as a vehicle component, so that a force acting on the front leads to the deformation of the element in case of a collision, **characterized in that** the beam has only one chamber and a cross-section wherein the side walls of the beam have a transition section (6, 7), as a result of which the distance between the side walls gradually changes in such a manner that the side walls on one side of the transition sections are at a greater distance from one another and the side walls on the other side of the transition sections are at a smaller distance from one another, such that on deformation the beam passes through at least two deformation zones, each of which requires a maximum deformation force, before, in an end zone at complete deformation, the beam requires a deformation force which only increases.

2. Element according to Claim 1, in which the maximum deformation force (F₂) of the second deformation zone is higher than the maximum deformation force (F₁) of the first deformation zone.

3. Element according to Claim 1 or 2, in which the second deformation zone is longer than the first deformation zone.

4. Element according to any one of the preceding Claims, in which the transition sections (6, 7) in the side walls are at an angle to the adjoining sections of the side walls which is greater than 90°.

5. Element according to any one of the preceding Claims, in which the side walls (4, 5) on both sides of the transition sections are substantially parallel to one another, preferably at an angle to one another of at most 10°.

6. Element according to any one of the preceding Claims, in which the sections (a) of the side walls which are at a greater distance from one another are shorter than the sections (b) of the side walls which are at a smaller distance from one another.

7. Element according to any one of the preceding Claims, in which the front (2) of the beam and the rear (3) of the beam are of different width, so that the beam has a relatively wide side and a relatively narrow side.

8. Element according to any one of the preceding Claims, in which a deformable material is present at the transition sections of the side walls between the side walls.

9. Element according to any one of the preceding Claims, in which the beam is provided with a reinforcement over a section of the cross-section at the front or the rear.

10. Element according to any one of the preceding Claims, in which one or both ends of the beam are at least partly closed off by a deformable material.

11. Use of an energy-absorbing element according to one of Claims 1 - 10 as part of a longitudinal member or sill, A-pillar, B-pillar, C-pillar, D-pillar, E-pillar, bumper support, door reinforcement beam or seat part of a vehicle.

12. Bumper support of a vehicle provided with a collision energy-absorbing element according to one of Claims 1 - 10, in which the bumper support comprises the energy-absorbing element over at least part of its length.

13. Bumper support according to Claim 12, in which the bumper support comprises the energy-absorbing element over its entire length.

14. Bumper support according to Claim 13, in which the front section of the beam passes through the first deformation zone.

15. Bumper support according to Claim 13, in which the rear section of the beam passes through the first deformation zone.

16. Bumper support according to one of Claims 12 - 15, in which the ends of the bumper support comprise an energy-absorbing element.

## Patentansprüche

1. Element zur Absorption von Aufprallenergie zur Verwendung als ein Fahrzeugbauteil bzw. eine -komponente, wobei das Element (1) im Wesentlichen die Gestalt eines rohrförmigen Trägers mit einer Umfangswand aufweist, die im Querschnitt geschlossen ist, wobei der Träger eine Front bzw. Vorderseite (2), einen hinteren Teil bzw. Rückseite (3) und zwei Seitenwände (4, 5) und zwei Enden aufweist, wobei die Vorderseite des Trägers vom Fahrzeug weg gerichtet ist, wenn das Element als Fahrzeugbauteil verwendet wird, so dass eine auf die Vorderseite einwirkende Kraft zur Deformierung bzw. Verformung des Elements im Falle eines Aufpralls führt, **dadurch gekennzeichnet, dass** der Träger nur eine Kammer und einen Querschnitt aufweist, wobei die Seitenwände des Trägers einen Übergangsabschnitt (6, 7) haben, was zur Folge hat, dass sich der Abstand zwischen den Seitenwänden allmählich bzw. sukzessive so ändert, dass die Seitenwände auf einer Seite der Übergangsabschnitte einen größeren Abstand zueinander aufweisen, und die Seitenwände auf der anderen Seite der Übergangsabschnitte einen geringeren Abstand zueinander aufweisen, so dass der Träger bei der Verformung durch wenigstens zwei Verformungszonen läuft, wobei jede von diesen eine maximale Verformungskraft benötigt, bevor, in einer Endzone bei vollständiger Verformung, der Träger eine Verformungskraft benötigt, die nur zunimmt.

2. Element nach Anspruch 1, bei dem die maximale Verformungskraft (F₂) der zweiten Verformungszone höher als die maximale Verformungskraft (F₁) der ersten Verformungszone ist.

3. Element nach Anspruch 1 oder 2, bei dem die zweite Verformungszone länger als die erste Verformungszone ist.

4. Element nach einem der vorhergehenden Ansprüche, bei dem die Übergangsabschnitte (6, 7) in den Seitenwänden in einem Winkel zu den angrenzenden Abschnitten der Seitenwände stehen, der größer als 90° ist.

5. Element nach einem der vorhergehenden Ansprüche, bei dem die Seitenwände (4, 5) auf beiden Seiten der Übergangsabschnitte im Wesentlichen parallel zueinander verlaufen, bevorzugt in einem Winkel von höchstens 10° zueinander.

6. Element nach einem der vorhergehenden Ansprüche, bei dem die Abschnitte (a) der Seitenwände, die einen größeren Abstand zueinander haben, kürzer als die Abschnitte (b) der Seitenwände sind, die einen geringeren Abstand zueinander haben.

7. Element nach einem der vorhergehenden Ansprüche, bei dem die Vorderseite (2) des Trägers und die Rückseite (3) des Trägers eine unterschiedliche Breite aufweisen, so dass der Träger eine relativ breite Seite und eine relativ schmale Seite hat.

8. Element nach einem der vorhergehenden Ansprüche, bei dem ein verformbares Material an den Übergangsabschnitten der Seitenwände zwischen den Seitenwänden vorliegt.

9. Element nach einem der vorhergehenden Ansprüche, bei dem der Träger mit einer Verstärkung über einen Abschnitt des Querschnitts an der Vorder- oder Rückseite versehen ist.

10. Element nach einem der vorhergehenden Ansprüche, bei dem ein oder beide Enden des Trägers zumindest teilweise durch ein verformbares Material abgeschlossen bzw. abgedichtet sind.

11. Verwendung eines energieabsorbierenden Elements nach einem der Ansprüche 1 - 10 als Teil eines Längsteils oder -trägers bzw. Schwelle, einer A-Säule, B-Säule, C-Säule, D-Säule, E-Säule, Stoßstangenhalterung, eines Türverstärkungsträger oder Sitzteils eines Fahrzeugs.

12. Stoßstangenhalterung bzw. -stütze eines Fahrzeugs, versehen mit einem die Aufprallenergie absorbierenden Element gemäß einem der Ansprüche 1 - 10, bei dem die Stoßstangenhalterung das energieabsorbierende Element über wenigstens einen Teil seiner Länge umfasst.

13. Stoßstangenhalterung nach Anspruch 12, bei dem die Stoßstangenhalterung das energieabsorbierende Element über seine gesamte Länge umfasst.

14. Stoßstangenhalterung nach Anspruch 13, bei der der vordere Abschnitt des Trägers durch die erste Verformungszone läuft.

15. Stoßstangenhalterung nach Anspruch 13, bei der der hintere Abschnitt des Trägers durch die erste Verformungszone läuft.

16. Stoßstangenhalterung nach einem der Ansprüche 12 - 15, bei der die Enden der Stoßstangenhalterung ein energieabsorbierendes Element umfassen.

## Revendications

1. Elément absorbant l'énergie d'une collision, destiné à être utilisé comme composant de véhicule, ledit élément (1) ayant essentiellement la forme d'une poutre tubulaire pourvue d'une paroi périphérique qui est fermée en section transversale, ladite poutre comportant un avant (2), un arrière (3), deux parois latérales (4, 5) et deux extrémités, l'avant de la poutre étant dirigé à l'écart du véhicule lorsque l'élément est utilisé comme composant de véhicule, de sorte qu'une force agissant sur l'avant conduit à la déformation de l'élément en cas de collision, **caractérisé en ce que** la poutre ne comporte qu'une chambre et présente une section transversale dans laquelle les parois latérales de la poutre ont une portion de transition (6, 7), en conséquence de quoi la distance entre les parois latérales change progressivement de telle manière que les parois latérales, d'un côté des portions de transition, sont à une distance relativement grande l'une de l'autre et les parois latérales, de l'autre côté des portions de transition, sont à une distance relativement petite l'une de l'autre, de sorte qu'à la déformation, la poutre passe à travers au moins deux zones de déformation, chacune d'entre elles nécessitant une force de déformation maximale, avant, dans une zone de fin à déformation complète, que la poutre ne nécessite une force de déformation qui ne fait qu'augmenter.

2. Elément selon la revendication 1, dans lequel la force de déformation maximale (F₂) de la deuxième zone de déformation est supérieure à la force de déformation maximale (F₁) de la première zone de déformation.

3. Elément selon la revendication 1 ou 2, dans lequel la deuxième zone de déformation est plus longue que la première zone de déformation.

4. Elément selon l'une quelconque des revendications précédentes, dans lequel les portions de transition (6, 7) des parois latérales forment un angle avec les portions contiguës des parois latérales qui est supérieur à 90°.

5. Elément selon l'une quelconque des revendications précédentes, dans lequel les parois latérales (4, 5) de chaque côté des portions de transition sont substantiellement parallèles entre elles, de préférence avec un angle entre elle d'au plus 10°.

6. Elément selon l'une quelconque des revendications précédentes, dans lequel les portions (a) des parois latérales qui sont à une relativement grande distance l'une de l'autre sont plus courtes que les portions (b) des parois latérales qui sont à une relativement petite distance l'une de l'autre.

7. Elément selon l'une quelconque des revendications précédentes, dans lequel l'avant (2) de la poutre et l'arrière (3) de la poutre sont de largeur différente, de sorte que la poutre a un côté relativement large et un côté relativement étroit.

8. Elément selon l'une quelconque des revendications précédentes, dans lequel un matériau déformable est présent au niveau des portions de transition des parois latérales entre les parois latérales.

9. Elément selon l'une quelconque des revendications précédentes, dans lequel la poutre est pourvue d'un renforcement sur une portion de la section transversale, à l'avant ou à l'arrière.

10. Elément selon l'une quelconque des revendications précédentes, dans lequel l'une ou les deux extrémités de la poutre sont au moins partiellement fermées par un matériau déformable.

11. Utilisation d'un élément absorbant l'énergie selon l'une quelconque des revendications 1 à 10 comme partie d'un organe longitudinal ou traverse, montant A, montant B, montant C, montant D, montant E, support de pare-chocs, poutre de renforcement de porte ou pièce de siège d'un véhicule.

12. Support de pare-chocs d'un véhicule pourvu d'un élément absorbant l'énergie d'une collision selon l'une des revendications 1 à 10, dans lequel le support de pare-chocs comprend l'élément absorbant l'énergie sur au moins une partie de sa longueur.

13. Support de pare-chocs selon la revendication 12, dans lequel le support de pare-chocs comprend l'élément absorbant l'énergie sur toute sa longueur.

14. Support de pare-chocs selon la revendication 13, dans lequel la portion avant de la poutre passe à travers la première zone de déformation.

15. Support de pare-chocs selon la revendication 13, dans lequel la portion arrière de la poutre passe à travers la première zone de déformation.

16. Support de pare-chocs selon l'une des revendications 12 à 15, dans lequel les extrémités du support de pare-chocs comprennent un élément absorbant l'énergie.
